Europäisches Patentamt

(19) European Patent Office  (11) Numéro de publication: **0 010 019**

Office européen des brevets  **A1**

(12) **DEMANDE DE BREVET EUROPEEN**

(21) Numéro de dépôt: **79400645.2**

(22) Date de dépôt: **14.09.79**

(51) Int. Cl.³: **B 60 G 17/00**
**B 60 G 19/02**

(30) Priorité: **14.09.78 FR 7826388**
**27.12.78 FR 7836510**

(43) Date de publication de la demande:
**16.04.80 Bulletin 80/8**

(84) Etats Contractants Désignés:
**BE CH DE FR NL**

(71) Demandeur: **Mulot, Suzette**
**152, rue Paul Doumer**
**F-78420 Carrières s/Seine(FR)**

(71) Demandeur: **Mulot, Georges**
**152, rue Paul Doumer**
**F-78420 Carrières s/Seine(FR)**

(72) Inventeur: **Mulot, Georges**
**152, rue Paul Doumer**
**F-78420 Carrières s/Seine(FR)**

(72) Inventeur: **Mulot, Suzette**
**152, rue Paul Doumer**
**F-78420 Carrières s/Seine(FR)**

(54) **Dispositif de nivellement transversal de remorques en stationnement (en particulier des caravanes).**

(57) Dispositif de suspension permettant un nivellement aisé des remorques en stationnement, sans levage ni calage.

Ce dispositif intégré à la suspension de ces véhicules permet d'une part la mise de niveau transversal de ceux-ci en faisant simultanément monter une roue (1) et descendre l'autre (2) ce qui permet de corriger l'assiette du véhicule, d'autre part le retour aux conditions de roulage de la remorque, la position des éléments de suspension (8, 9; 23, 24; 42, 43) étant assurée par des mécanismes de verrouillage (31; 60, 61) travaillant conjointement avec ceux nécessaires au nivellement.

Ce dispositif est applicable à la plupart des types de suspensions sous des formes diverses
– suspension à barres de torsion (8, 9)
– suspension à base de caoutchouc (23, 24)
– suspension à ressorts (42, 43)

*Fig. 4.*

Croydon Printing Company Ltd.

1

La présente invention a pour objet un dispositif intégré à la suspension permettant la mise à niveau transversal facile des remorques en stationnement et en particulier des remorques de camping et le rétablissement ultérieur rigoureux des conditions nécessaires à un roulage correct.

Ce nivellement est en effet important. (Utilisation des appareils ménagers, réfrigérateur par exemple, couchage horizontal.) Les terrains sont rarement horizontaux et, pour éviter que la remorque ne soit entrainée par la déclivitée, les roues d'un même essieu sont placées sur la ligne de plus grande pente. Le nivellement longitudinal est aisé et obtenu par basculement grace aux néquilles réglables fixées généralement aux quatre coins du véhicule. Le nivellement transversal qui doit être obtenu en premier lieu est par contre beaucoup plus difficile.

Les moyens usuels de mise de niveau transversal sont le cric, les cales que l'on glisse sous les roues et les béquilles citées plus haut, lesquelles sont abusivement employées au risque de fausser la géométrie générale de l'ensemble de la remorque.

L'opération qui peut, dans certaines circonstances, être périlleuse est toujours délicate et le résultat obtenu très souvent approximatif.

La présente invention a pour but de rendre cette manoeuvre aisée, sans danger, et précise. Telle qu'elle est caractérisée dans les revendications, elle résout le problème du nivellement transversal en faisant simultanément monter une roue et descendre l'autre par rapport à la remorque ce qui permet de corriger l'assiette de celle-ci, le rétablissement de l'état normal de la suspension nécessaire au roulage étant obtenu par retour à la position de réglage, laquelle est définie et verrouilée de façon sûre par un dispositif évitant toute erreur sur la position de réglage nécessaire au roulage.

Les revendications relatives à cette invention concernent l'utilisation et la combinaison des mécanismes permettant, les uns de faire monter une roue et de descendre l'autre afin d'obtenir, à l'arrêt, le nivellement des remorques en stationnement et les autres, le rétablissement de la position de roulage avant de repartir et non pas les mécanismes eux-mêmes qui sont connus sus des formes diverses et pour des nombreuses applications d'usage général.

En particulier, un certain nombre de brevets, dont le premier semble être le brevet américain n° 135 3930 sont relatifs à la correction de la position de véhicules pour la plupart automobiles, mais le but de tous ces brevets est totalement différent de celui de la présente invention.

Tous traitent de véhicules en mouvement dont l'assiette est corrigée continuellement, soit manuellement, soit automatiquement, pour tenir compte de la surface de roulage, voire de la force centrifuge afin de rouler le plus vite possible, alors que la présente invention est relative à des remorques et plus particulièrement à des caravanes dont le nivellement est assuré pendant le stationnement, la position de réglage de la suspension étant au contraire immuable lorsque le véhicule roule car verrouilléeavant de partir.

L'invention élimine le levage du véhicule, le calage sous les roues, les risque d'accidents. Par ailleurs, la position obtenue est plus basse et plus pratique, et l'utilisation d'accessoires tels que les auvents est plus facile.

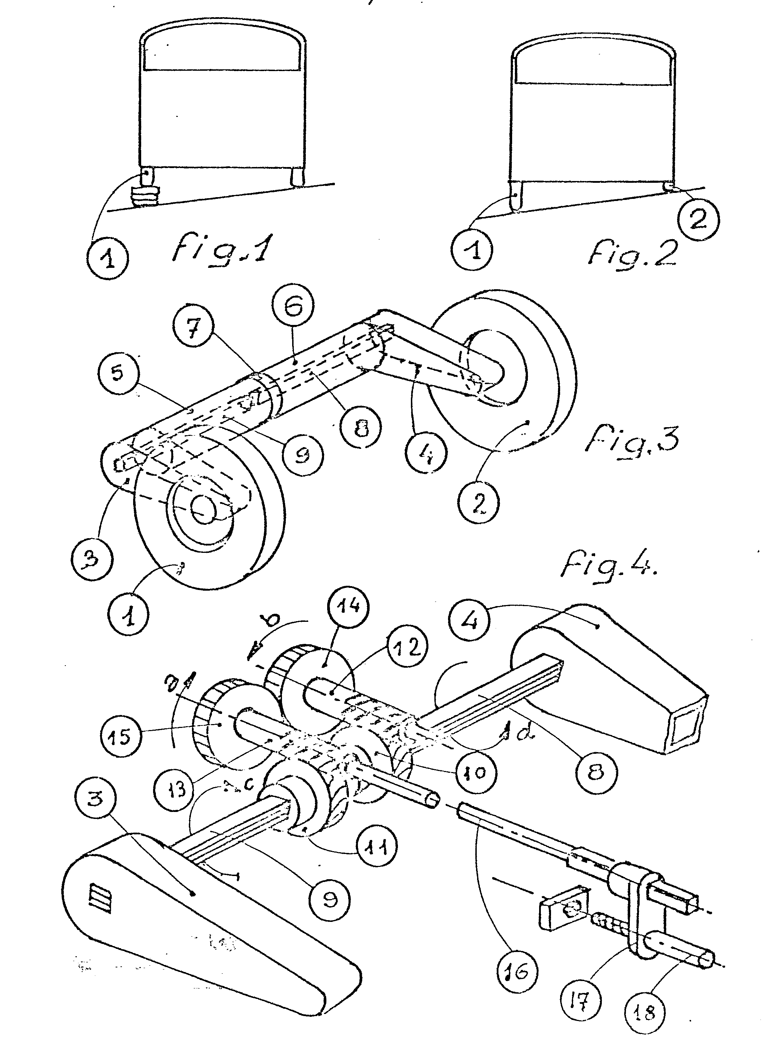

La figure 1 représente une remorque de camping nivelée conformément aux usages. La remorque a été soulevée et la roue 1 posée sur cales.

La figure 2 représente une remorque suivant l'invention ; le nivellement est assuré par la levée de la roue 2 et la descente de la roue 1.

L'invention implique une modification des essieux.

Comme les types de suspension sont nombreux et que les mêmes solutions mécaniques peuvent être applicables à plusieurs genres, les combinaisons de mécanismes de levée et de descente simultanées des roues et de mécanismes de verrouillage sont innombrables.

Les agencements suivants ne sont donc pas limitatifs, ils ne sont que des exemples de combinaisons possibles pour des suspensions particulières.

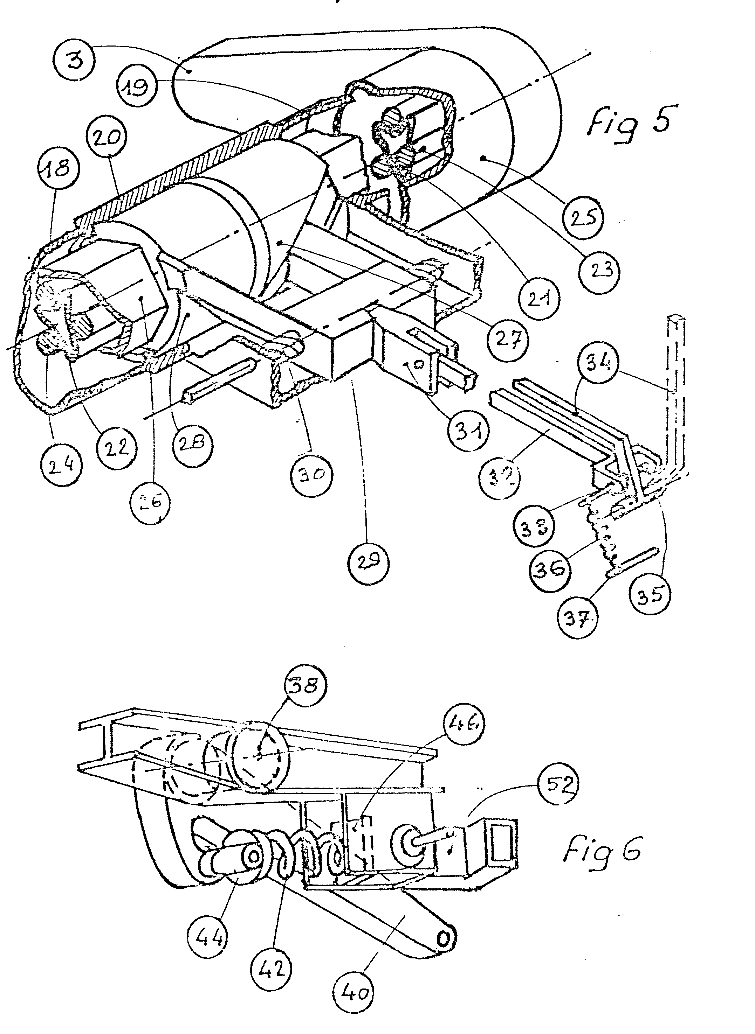

La figure 3 représente une suspension à barres de torsion d'un type courant.

La figure 4 ce même ensemble modifié conformément à l'invention.

La figure 5, une suspension à base de caoutchouc d'un modèle connu modifiée suivant l'invention.

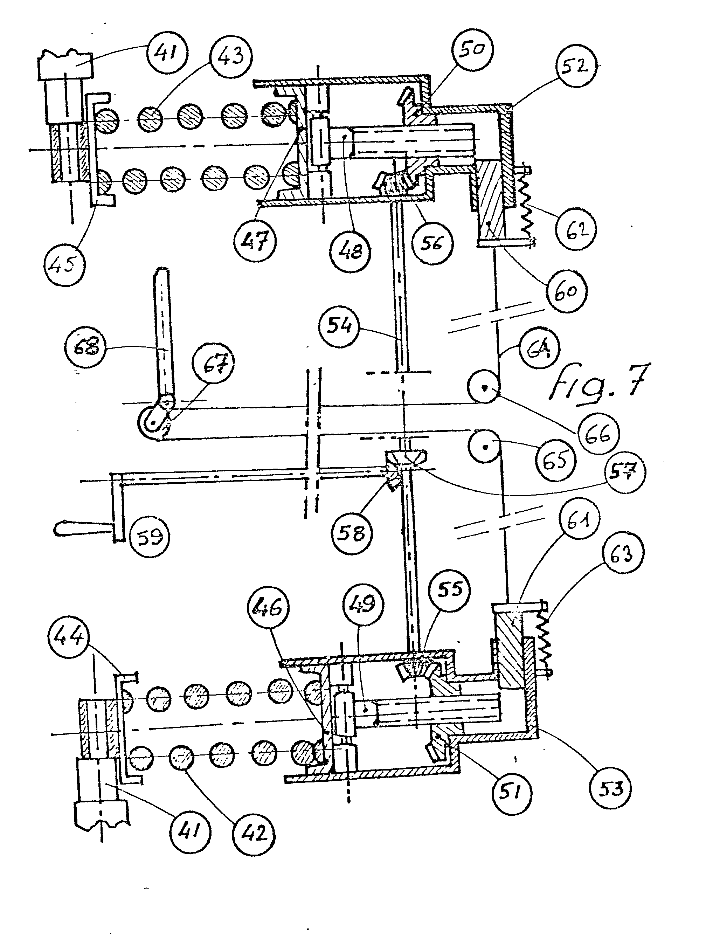

La figure 6, et la figure 7, l'une, un ensemble de suspension (coté droit) et l'autre, un schéma complet toutes deux relatives à un type de suspension à ressorts connu modifié suivant invention.

Figure 3 (suspension à barres de torsion).

Les bras de suspension 3 et 4 sont montés articulés à l'extrémité d'une traverse composé de deux tronçons 5 et 6 et d'un boitier 7 sur lequel ceux-ci sont soudés. Deux faisceaux de barres de torsion 8 et 9 ( ou très souvent un faisceau unique de la longueur de la traverse sont montées d'une part dans le logement d'entrainement des bras et d'autre part dans le trou central du boitier 7. Les sections à ces endroits sont telles que la liaison en rotation est assurée.

Figure 4 (suspension à barres de torsion modifiée suivant l'invention).

Le mécanisme de commande de levée et de descente des bras est logé dans le boitier central non représenté. Les faisceaux de barres 8 et 9 sont montés respectivement dans les roues à vis sans fin 10 et 11 maintenues par les paliers du boitier. Les deux vis sans fin 12 et 13 engrènent, l'une avec la roue 10, l'autre avec la roue 11. Les deux couples de roues et vis sans fin sont identiques par leurs caractéristiques de denture et de sens d'hélice. Deux pignons de même diamètre 14 et 15 engrènant ensemble sont montés l'un sur la vis 12, l'autre sur la vis 13.

Lorsque l'on entraîne la vis 13 et le pignon 15 dans la direction "a", celui de rotation des aiguilles d'une montre par exemple, la roue 12 et la vis 14 tournent dans le sens inverse "b", soit le sens trigonométrique. Si le sens des hélices des couples des roues et vis sans fin est à droite par exemple, la barre 9, donc le bras 3, pivote dans le sens "c", faisant descendre la roue; par contre la barre 8 tourne dans le sens "d" opposé à "c" et le bras fait monter la roue.

La rotation de la vis 13 (ou de la vis 12 est assurée par exemple grâce à une longue tige 16 dont l'extrémité est maintenue à l'avant ou à l'arrière de la remorque; sur cette extrémité coulisse une manivelle d'entraînement 17 dont la poignée 18 tourne folle. En position de roulage, l'extrémité de la poignée est vissée, donc immobilisée dans un trou taraudé solidaire de la remorque.

Il faut d'abord dévisser la poignée, et dégager la manivelle avant de tourner celle-ci pour niveler la remorque.

Le rapport de démultiplication des couples roue et vis assure la précision d'arrêt. Un tour de manivelle correspond néanmoins à une variation de l'angle de pivotement des bras suffisamment importante pour que l'utilisateur ne puisse se tromper d'un tour.

Il est possible également de monter sur l'axe 16 un petit pignon engrénant avec une roue dentée de plus grand diamètre et tournant donc moins vite. Monté sur le même axe que cette roue dentée, un disque peut interdire le vissage de la poignée de la manivelle, sauf pour la position correspondant au réglage (encoche par exemple). Le risque de se tromper d'un tour est ainsi éliminé.

La manivelle est dans cet exemple utilisée à la fois pour commander le mouvement synchronisé des bras et pour retrouver la position de roulage et l'assuré.

La commande des barres de torsion peut être obtenue par la rotation de deux disques entraineurs (remplaçant les roues 10 et 11) commandés par des bielles, des poussoirs ou des vis, ou autres moyens agissant en opposition sur ces disques pour avoir les rotations de sens inverses nécessaires.

Figure 5 (suspension à base de caoutchouc modifiée suivant l'invention. )

Tous les essieux des suspensions à base de caoutchouc se présentent de façon analogue: un tube extérieur polygonal terminé par des paliers autour desquels pivotent les bras, un tube intérieur avec du caoutchouc centrant ce dernier, ce caoutchouc étant sous la forme de plusieurs torons ou d'une masse adhérant aux de x tubes. La déformation du caoutchouc et la plus ou moins grande flexibilité du tube intérieur concourent à la souplesse de la suspension.

Sur la figure 5 les éléments de l'essieu cités précédemment sont coupés par leur milieu.

Pour rétablir la rigidité de l'essieu, une enveloppe extérieure composée de deux tubes 18 et 19 et d'un boitier central 20 maintiennent ces éléments. Les extrémités de cette enveloppe servent de paliers aux bras. Dans le type de suspension choisie, la section des tubes intérieurs 21 et 22 est approximativement triangulaire avec des côtés concaves. Les torons 23 et 24 sont cylindriques. Les tubes polygonaux 25 et 26 sur lesquels sont fixés les deux disques 27 et 28 sont de forme hexagonale. Dans les disques. sont taillées des encoches hélicoïdales de sens inverses. Un bloc 29 coulissant dans le boitier 20 comporte deux saillies ajustées dans les dites encoches. (Pour les besoins de la représentation les formes dessinées sont beaucoup moins compactes que dans la réalisation). Une vis, 30 immobilisée axialement par rapport au boitier 20, est vissé dans le bloc 29. Un doigt 31 a deux pentes irréversibles, coulissant dans le boitier 20 et poussé par une tringle 32 est enfoncé complètement dans l'entaille en forme de Vé faite dans le bloc 29 lorsque le véhicule est en état de roulage. Cette tringle 32 relie le doigt 31 à l'axe 33 du levier 34 articulé autour de son axe support 35. Le ressort 36, accroché à l'axe 35 du levier 34 et à l'axe fixe 37, agit sur la tringle 32, soit pour pousser le doigt 31 vers l'encoche lorsque le levier a été manoeuvré dans cette direction, soit pour assurer le large dégagement du doigt pour la manoeuvre inverse.

Après avoir dégagé le doigt 31 à l'aide du levier 34, (position en pointillé ) l'utilisateur peut, en tournant la vis 30 dans le sens convenable déplacer le bloc 29 qui, grâce aux taillages hélicoïdaux, fait tourner les disques 27 et 28, donc les tubes 21 et 22 faisant ainsi

6

pivoter les bras 3 et 4 dans les sens désirés.

La manoeuvre de la vis 30 permet de revenir à la position centrale du bloc qui correspond à la position de roulage. Le doigt poussé au préalable par la tringle, le levier ayant été manoeuvré en conséquence, pénétre dans le Vé et arrète le bloc pour cette position définie. Le levier peut ainsi que représenté être coudé afin qu'il s'escamote à l'avant de la remorque dans le plan du chassis pour la position de roulage, ce qui évite toute fausse interprétation.

Sa position peut également être controlée électriquement ou mécaniquement en liaison avec le système d'accrochage de la remorque à la voiture dont il peut interdire l'usage s'il ne se trouve pas dans la bonne position.

Figure 6 et 7 (suspension à ressorts).

De chaque côté de la remorque, un palier 38 ou 39, solidaire du chassis supporte un bras de suspension 40 ou 41 sur lequel est fixé un ensemble de roues non représenté. Le ressort 42 ou 43 s'appuie d'une part sur la butée de bras de suspension 44 ou 45 et sur l'appui 46 ou 47. Cet appui, normalement fixe dans son utilisation est habituellement prévu ajustable sur une faible course pour compenser les variations de force des ressorts afin de fignoler l'équilibre de la remorque.

En application de l'invention, les déplacements de sens inverses sont beaucoup plus grands et synchronisés. En effet, les appuis 46 et 47 sont rendus solidaires respectivement des vis 48 et 49 sur lesquelles sont montés les pignons coniques 50 et 51 plaqués contre les boitiers 52 et 53 faisant partie du chassis. Un arbre 54 sur lequel sont fixés à une extrémité le pignon 55 qui engrène avec le pignon 51 et à l'autre le pignon 56 qui en prise avec le pignon 50.

Un pignon conique 57 fixé sur l'arbre 54 engrène avec le pignon 58 terminant la manivelle 59. Deux blocs 60 et 61 coulissant dans les boitiers 52 et 53 sont rappelés par les ressorts 62 et 63 sous les vis 48 et 49 assurant ainsi la position de réglage. Un cable 64 relie ces deux blocs en passant autour des poulies fixes 65 et 66 de la poulie 67 montée au bout du levier 68. Un ressort faible tire sur ce levier pour maintenir la tension du cable.

En manoeuvrant le levier 68 et en l'immobilisant par le crochet 69; on dégage les deux blocs 60 et 61 (cas de figure représenté). La manivelle 59 permet, en faisant tourner les pignons 58, 57, 55 et 56, de commander les rotations inverses des pignons 50 et 51, ce qui fait reculer un des appuis et avancer l'autre, commandant ainsi la descente d'un bras et la montée de l'autre.

Avant de repartir, l'utilisateur dégage le crochet. Un des blocs, le bloc 60 par exemple, peut toujours s'engager sous la vis 48 à laquelle il sert de butée. La manoeuvre de la manivelle 59 déplace les appuis 46 et 47 jusqu'au moment où la vis 48 vient en butée sur le bloc 60. Avec un faible jeu, le bloc 61 vient se glisser sous la vis 49. L'ensemble est ainsi verrouillé. Le mouvement du levier, qui s'effectue en deux temps est aisément contrôlable.

On remarquera que, en ce qui concerne les exemples représentés figure 5, 6 et 7, la commande du déplacement des bras et celle du verrouillage sont distinctes, ce qui la différencie de celle utilisée pour l'exemple figure 4.

Enfin,
une commande du type manivelle à une position de blocage (figure 4 ) pourrait déplacer le bloc 29 (figure 5),
deux blocs analogues aux blocs 60 et 61 pourraient servir de butée au bloc 29.

Ces deux exemples, entre autres possibles, montrent que les nombreuses solutions réalisables ne sont pas liées aux types de suspensions.

L'invention c'est à dire la combinaison des mécanismes de levée et de descente synchronisées des bras et ceux des mécanismes de verrouillage est utilisable chaque fois qu'il est nécessaire d'obtenir un nivellement à l'arrêt de remorque aisé et précis en conservant lors du roulage intégralement la qualité de suspension. Elle est applicable en particulier aux caravanes de camping à un ou plusieurs essieux.

Revendications de brevet

1 - Dispositif équipant les suspensions des remorques et en particulier des caravanes, permettant, à l'arrêt, en montant une roue et en descendant l'autre de manière synchronisée, le nivellement précis du véhicule, avec moyens de commande associés et caractérisé en ce que le moyen de commande (manivelle) du mécanisme (train de pignons, vis et roues à vis) faisant pivoter les éléments de suspension (demi-ensembles de barres de torsion), comporte un dispositif permettant à ces derniers de revenir de façon sûre à la position fixe de roulage (mécanisme détrompeur composé d'un disque à une encoche lié à la rotation de deux pignons engrènant entre eux et dont le plus petit est solidaire en rotation de la tige entraînée par la manivelle et n'autorisant l'immobilisation par vissage de la poignée tournante de cette manivelle que pour la position désirée) après son utilisation, utilisation correspondant à la période de stationnement pendant laquelle le dispositif permet le nivellement transversal, précis sûr et sans risque du véhicule.

2 - Dispositif suivant revendication 1 caractérisé par le fait que le moyen d'assurer la position fixe de roulage, distinct du moyen de commander le mécanisme (disques à rampes hélocoïdales) faisant pivoter les éléments de suspension (demi-essieu à base de caoutchouc) est constitué par un élément centreur (doigt à deux pentes irréversibles) lié à un élément de commande (levier coudé) dont la position et la forme permettent de façon non équivoque la connaissance des conditions de réglage de la suspension.

3 - Dispositif suivant revendication 2 caractérisé par le fait que la position du moyen de commande de verrouillage (levier) est contrôlée effectivement en liaison avec l'accrochage de la remorque. (microrupteur)

4 - Dispositif suivant revendication 1 et 2 caractérisé par le fait que le moyen d'assurer la position de roulage des bras de suspension (à ressorts) est constitué de deux éléments indépendants (bloc 40 et 41) liés entre eux, chacun d'eux vérifiant la limite de débattement d'un bras.

0010019

1/3

fig.1

fig.2

Fig.3

Fig.4.

001001?

Fig 5

Fig 6

3/3

Fig. 7

**RAPPORT DE RECHERCHE EUROPEENNE**

Office européen des brevets

EP 79 40 0645

| | | | |
|---|---|---|---|
| **DOCUMENTS CONSIDERES COMME PERTINENTS** | | | **CLASSEMENT DE LA DEMANDE (Int. Cl. 3)** |
| Catégorie | Citation du document avec indication, en cas de besoin, des parties pertinentes | Revendication concernée | |
| | FR - A - 828 405 (MATTON)<br>* En entier * | 1 | B 60 G 17/02<br>19/02 |
| | -- | | |
| | US - A - 3 704 897 (BAGGE)<br>* Colonne 2, ligne 14 à colonne 4, ligne 7; figures 1-5 * | 1 | |
| | -- | | |
| D | US - A - 1 353 393 (HAUPT)<br>* En entier * | 1 | |
| | -- | | **DOMAINES TECHNIQUES RECHERCHES (Int. Cl. 3)** |
| X | FR - A - 796 321 (KOLBE)<br>* En entier * | 1,2,4 | B 60 G |
| | -- | | |
| | US - A - 2 864 626 (SCHANTZ)<br>* Colonne 3, ligne 5 à colonne 6, ligne 8; figures 1-19 * | 3 | |
| | -- | | |
| | FR - A - 1 578 778 (BERTHOLOMEY)<br>* En entier * | 1 | |
| | -- | | **CATEGORIE DES DOCUMENTS CITES** |
| | GB - A - 964 932 (ATHERTON)<br>* Page 2, ligne 12 à page 4, ligne 126 * | 1,3 | X: particulièrement pertinent<br>A: arrière-plan technologique<br>O: divulgation non-écrite<br>P: document intercalaire<br>T: théorie ou principe à la base de l'invention |
| | -- | | E: demande faisant interférence |
| | FR - A - 2 191 832 (GRAFTIAUX)<br>* Page 3, ligne 10 à page 4, ligne 11; figures 1-4 * | 1,2 | D: document cité dans la demande<br>L: document cité pour d'autres raisons |
| | -- | ./. | &: membre de la même famille, document correspondant |

| | | |
|---|---|---|
| Le présent rapport de recherche a été établi pour toutes les revendications | | |
| Lieu de la recherche<br>La Haye | Date d'achevement de la recherche<br>20-12-1979 | Examinateur<br>ESPEEL |

OEB Form 1503.1  06.78

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendica- tion concernée | |
| | FR - E - 36 190 (PIRONNEAU) <br> * Page 2, ligne 26 - page 3, ligne 17; figures 1-3 * <br> -- | 1,4 | |
| | FR - A - 1 525 971 (WOESTELANDT) <br> * En entier * <br> -- | 1,4 | |
| A | FR - A - 1 337 204 (LABURTHE) | 1 | DOMAINES TECHNIQUES RECHERCHES (Int. Cl. ³) |
| A | FR - A - 1 319 231 (BOBARD) | 1 | |
| A | FR - A - 839 856 (DAL-BUONO) | 1 | |
| A | FR - A - 803 320 (TATRA) | 1 | |
| A | DE - B - 1 087 465 (L. LE POIX) | | |
| | ---- | | |